# EUROPEAN PATENT SPECIFICATION

(11) **EP 4 494 834 B1**
(45) Date of publication and mention of the grant of the patent: **10.09.2025**
(21) Application number: 24197978.0
(22) Date of filing: 16.05.2022
(51) Int. Cl.: B29C 33/10, B29C 41/46, B29C 41/06, B29K 69/00, B29K 23/00, B29K 77/00, B29L 22/00

(54) **ROTATIONAL MOULDING PROCESS AND RELATED MOULD FOR ROTATIONAL MOULDING COMPRISING A VENTING DEVICE**
ROTATIONSFORMVERFAHREN UND ZUGEHÖRIGE FORM ZUM ROTATIONSFORMEN MIT EINER ENTLÜFTUNGSVORRICHTUNG
PROCÉDÉ DE ROTOMOULAGE ET MOULE DE ROTOMOULAGE ASSOCIÉ COMPRENANT UN DISPOSITIF DE MISE À L'AIR LIBRE

(30) Priority: 04.06.2021 IT 202100014591
(43) Date of publication of application: 22.01.2025
(62) Divisional of application: 22730624.8
(73) Proprietor: Persico S.p.A., 24027 Nembro (BG) (IT)
(72) Inventor: PERSICO, Alessandra, 24027 Nembro (IT)
(74) Representative: Tirloni, Bartolomeo

(56) References cited:
- EP-A2- 1 808 280
- JP-A- 2005 131 831
- "Kunststoffverarbeitung", 1 January 1997, VOGEL, Würzburg, ISBN: 978-3-8023-1717-0, article OTTO SCHWARZ ET AL: "Kunststoffverarbeitung - Kapitel 13 Rotationsformen", pages: 181 - 181, XP055609985

## Description

### Technical field of the invention

The present invention relates to a rotational moulding process and to a related mould for rotational moulding comprising a venting device.

### State of the art

Typically, the rotational moulding is a moulding technology used to make typically hollow articles made of (thermoplastic) polymeric material. Some articles typically made using the rotational moulding technology are for example: parts of motor vehicles (e.g., roofs for trucks and tractors, etc.), boats (e.g., kayaks), tanks/cisterns (e.g., for fuels, for water, etc.), bins, vases, furnishing accessories, street furniture, toys, garden furniture, etc.

Patents US7677876B2, JP 2005 131831 A and US2017282415A1 disclose rotational moulding processes which use a mould comprising a venting device.

### Summary of the invention

In the known rotational moulding processes, it is provided a mould having an inner cavity with a conformation surface suitably counter-shaped to the geometry of the article to be made. The mould is then loaded with the raw polymeric material in fluid form (typically powder), closed and put in rotation about two (typically mutually perpendicular) rotation axes. The rotation of the mould allows to distribute (at least) a layer of polymeric material over the entire conformation surface of the cavity of the mould. During the rotation, the mould is heated (for example by an oven in which the mould is inserted, by electric resistances arranged on the outer surface of the mould, by a heat-transfer fluid that flows in special channels made in the walls of the mould, etc.) to allow the sintering of the raw polymeric material, so that it adheres to the inner surface of the cavity of the mould to reproduce its shape. Subsequently, the mould is cooled, opened and the article is extracted.

In the rotational moulding process disclosed in US7677876B2, a venting device is coupled to the mould to regulate the pressure inside the cavity of the mould during the moulding process.

This venting device comprises a hollow main body having a first and a second mouth which face respectively into the cavity of the mould and outside the mould. The venting device comprises also a shutter at the first mouth, said shutter being alternately movable between a close position and an open position to respectively occlude and leave free the first mouth. The venting device comprises also an actuator and a control rod which mechanically connect the actuator and the shutter to move it between the two positions.

Typically, during the heating of the mould, the shutter is in the close position until a predetermined temperature is reached. In this way, it is avoided that the polymeric material, still in the fluid state (i.e., not yet adhered to the conformation surface), escapes from the mould through the venting device (in particular when the latter is on the conformation surface).

Upon reaching of the aforesaid predetermined temperature, the shutter is opened and the heating of the mould is continued to allow the sintering. In this phase, the shutter in the open position allows the gas venting from the cavity and thus avoids the generation of an overpressure inside the cavity, which could for example arise due to the heating of the contained air and/or to the gases produced by the melting of the fluid polymeric material.

During the subsequent cooling of the mould, the shutter is kept in the open position. In this way, the suction of air from the outer environment towards the cavity of the mould is allowed, in order to compensate for the depression that otherwise would be generated in the cavity (which could cause damages to the formed article).

In this situation, the Applicant has realized that the heating of the mould (to favour the melting of the polymeric material) also causes a heating of the venting device, and in particular of the shutter. This heating of the shutter favours the adhesion of the polymeric material on the surface of the shutter facing the cavity of the mould.

Therefore, periodically (in extreme cases at each moulding cycle), the intervention of an operator to manually clean the surface of the shutter is required, in order to avoid an accumulation of polymeric material which could damage the shutter and/or cause a malfunction of the shutter, with risk of introducing defects in the moulded article, since the shutter (at least partially) loses the ability to regulate the pressure inside the cavity of the mould.

Therefore, according to the Applicant, the known rotational moulding processes require long and/or frequent machine downtime and/or a high use of manpower to perform the cleaning, with consequent increase of the industrial production costs.

The Applicant has therefore faced the problem of reducing the times and/or costs of the rotational moulding processes, in particular by making the cleaning operations of the venting device in the rotational moulding cycles less frequent and/or burdensome. According to the Applicant, the above problem is solved by a rotational moulding process, and a related mould for rotational moulding, according to the attached claims and/or having one or more of the following features.

According to an aspect the invention relates to a rotational moulding process for producing an article according to claim 1.

According to an aspect the invention relates to a mould for rotational moulding according to claim 8.

"Outer environment" means any environment outside the inner cavity.

According to an aspect the invention relates to a machine for rotational moulding according to claim 11.

According to the invention, said cooling said respective main body of the venting device is carried out through an air flow which from the outer environment passes through said cooling conduit for returning to the outer environment.

In this way it is possible to limit, if not to avoid, the risk of malfunctions of the venting device and at the same time increase the number of moulding cycles that can be carried out before performing cleaning operations. The Applicant has in fact observed that at the end of the first heating phase some polymeric material may still be present in fluid form (not yet adhered to the conformation surface). Therefore, when the shutter is moved from the close position to the open position at the beginning of the second heating phase, such material could enter the inner chamber of the venting device melting and adhering to the surfaces of the latter, due to the high temperature that the walls of the inner chamber would reach for the escape of hot air coming from the inner cavity. The cooling of the respective main body of the venting device, on the other hand, makes it possible to keep cool the walls of the inner chamber, avoiding the accumulation of polymeric material and limiting possible damages to the venting device. The Applicant has also observed that it is advantageous to cool the main body of the venting device even during the cooling of the main body of the mould, since the escape of hot air coming from the inner cavity of the mould can cause damages to the venting device, and in particular to the control rod.

The present invention in one or more of the aforesaid aspects can have one or more of the following preferred features.

Preferably, during said heating said main body until reaching the first temperature, the process further comprises subtracting heat from said shutter for maintaining said shutter at a respective temperature lower than said first temperature.

The Applicant believes that the feature according to which the shutter of the venting device is kept relatively cold (with respect to the main body and to the conformation surface) during the first heating phase of the main body (i.e., until the first temperature is reached) allows to limit, if not to completely avoid, that the polymeric material adheres to the shutter on the side facing the inner cavity. This is particularly advantageous when the venting device is located at the conformation surface, a situation in which the shutter can come into contact with a large amount of polymeric material.

In this way the accumulation of polymeric material on the shutter is avoided or limited, thus limiting both the required cleaning operations (with consequent advantages in terms of time and/or costs) and the risk of damages to the venting device and/or to the article due to malfunctions of the shutter.

Preferably said first temperature is greater than or equal to 90°C, more preferably greater than or equal to 100°C, even more preferably greater than or equal to 110°C, and/or less than or equal to 160°C, more preferably less than or equal to 150°C, even more preferably less than or equal to 140°C. In this way the adhesion of the polymeric material to the conformation surface of the inner cavity is favoured.

Preferably said second temperature is greater than or equal to 150°C, more preferably greater than or equal to 160°C, even more preferably greater than or equal to 170°C, and/or less than or equal to 250°C, more preferably less than or equal to 240°C, even more preferably less than or equal to 230°C. In this way the complete sintering of the polymeric material for obtaining the finished article is favoured.

Preferably a difference between said first temperature and said respective temperature of the shutter is greater than or equal to 10°C, more preferably greater than or equal to 20°C, even more preferably greater than or equal to 30°C. Preferably said respective temperature of the shutter is less than or equal to 100°C, more preferably less than or equal to 90°C, even more preferably less than or equal to 80°C. In this way the adhesion of the polymeric material on the shutter, and/or its melting, during the first heating phase are efficiently limited.

Preferably said subtracting heat from said shutter comprises generating a further air flow which from the outer environment reaches said shutter, and then returns to the outer environment. In this way it is possible to simply cool the shutter. Preferably said further air flow reaches a surface of said shutter facing away from said inner cavity (i.e., the surface of the shutter that faces the inner chamber of the venting device).

Preferably said inner chamber is in air communication with the outer environment also through a third mouth, more preferably arranged at opposite side of said inner chamber with respect to said shutter. Preferably said further air flow goes from said third mouth to said surface of said shutter, then to said inner chamber and finally to said outer environment through said at least one second mouth. In this way, the further air flow rapidly reaches, and therefore without being heated up, the surface of the shutter thus efficiently cooling the shutter.

Preferably said venting device comprises a control rod which mechanically connects said shutter to said actuator, said control rod comprising an inner channel which puts in fluid communication said third mouth with said surface of the shutter facing away from said inner cavity and with said inner chamber. In this way the further air flow effectively cools the shutter.

Preferably, during said heating said main body until reaching said second temperature, said shutter is in the open position. In this way, through the second mouth (and possibly also the third mouth), the escape of the gases generated in the inner cavity of the mould during the second heating phase is favoured.

Preferably, during said cooling said main body, said shutter is in the open position. In this way, the suction of air from the outer environment is allowed (through the second and, possibly, the third mouth) so as to compensate for the depression that would be generated in the inner cavity of the mould.

Exemplarily, said cooling said respective main body of the venting device is done by subtracting heat from said respective main body of the venting device.

Preferably a difference between said first temperature and said respective temperature of the respective main body of the venting device is greater than or equal to 10°C, more preferably greater than or equal to 20°C, even more preferably greater than or equal to 30°C. Preferably said respective temperature of the respective main body of the venting device is less than or equal to 100°C, more preferably less than or equal to 90°C, even more preferably less than or equal to 80°C.

In one embodiment said mould comprises a further venting device fixed to said main body and comprising:
- a respective inner chamber in air communication with said inner cavity through a respective first mouth and with an outer environment through at least one respective second mouth;
- a respective shutter movable between a respective open position, in which let free said respective first mouth for putting said inner cavity in air communication with the outer environment, and a respective close position, in which closes said respective first mouth for preventing said air communication;
- a respective actuator for alternately moving said respective shutter between the respective open position and the respective close position.

Preferably said further venting device has one or more of the (e.g., structural) features of said venting device.

Preferably, during said heating said main body until reaching said first temperature and said second temperature, it is provided operating said further venting device as said venting device is operated.

Preferably, during said cooling said main body, the process comprises:
- keeping said shutter in the open position and said respective shutter in the respective open position;
- generating a still further air flow which from the outer environment reaches said inner cavity through said venting device, and then returns to the outer environment through said further venting device.

Preferably said still further air flow goes from said third mouth (and/or from said at least one second mouth) to said inner chamber, then to said inner cavity, then to said respective inner chamber and finally to a respective third mouth of the further venting device (and/or to said at least one respective second mouth).

In this way, during the cooling of the main body, one of the two venting devices acts as an entry point inside the cavity of the mould for a relatively cold air flow (e.g., at room temperature), while the other of the two venting devices acts as an outlet for that air flow. The entry of fresh air allows to effectively subtract heat present in the inner cavity of the mould, thus quickly cooling the formed article.

Preferably said further venting device comprises a further main body which defines said respective inner chamber.

According to the invention said further venting device comprises a respective cooling conduit that passes (through) said further main body, said respective cooling conduit not being in air communication with said respective inner chamber.

Preferably, during said cooling the main body, it is provided cooling said further main body of the further venting device, more preferably through a respective air flow that from the outer environment passes through said respective cooling conduit for returning to the outer environment.

In fact, in this embodiment, the inner chamber of the venting device which acts as an outlet for the (hot) air flow coming from the inner cavity (i.e., the still further air flow) tends to heat up with the consequent risk of damages and/or malfunctions of this venting device.

Preferably, during said cooling the main body, it is provided interrupting said cooling of said respective main body of the venting device. In fact, the inner chamber of the venting device which acts as an entry point for the air flow coming from the outside is substantially maintained at the temperature of the air flow immitted for speeding up the cooling of the formed article.

### Brief description of the drawings

- Figure 1 shows in a purely schematic and partial way a top view of a machine comprising a mould for rotational moulding according to an embodiment of the present invention;
- figures 2-3 show a schematic and partial section along the line 200 of the mould of figure 1 with the shutter of the venting device respectively in the close and open position;

Figure 4 shows a schematic and partial section along the line 201 of the mould of figure 1;
Figure 5 schematically and partially shows a side section of a machine comprising a mould for rotational moulding according to a further embodiment of the present invention.

### Detailed description of some embodiments of the invention

The features and advantages of the present invention will be further clarified by the following detailed description of some embodiments, presented by way of non-limiting example of the present invention, with reference to the attached figures.

In the figures with the reference number 100' it is indicated a machine for rotational moulding comprising a mould 100 for rotational moulding. The machine 100' comprises rotating means of the mould 100, not shown nor described as, for example, of known type.

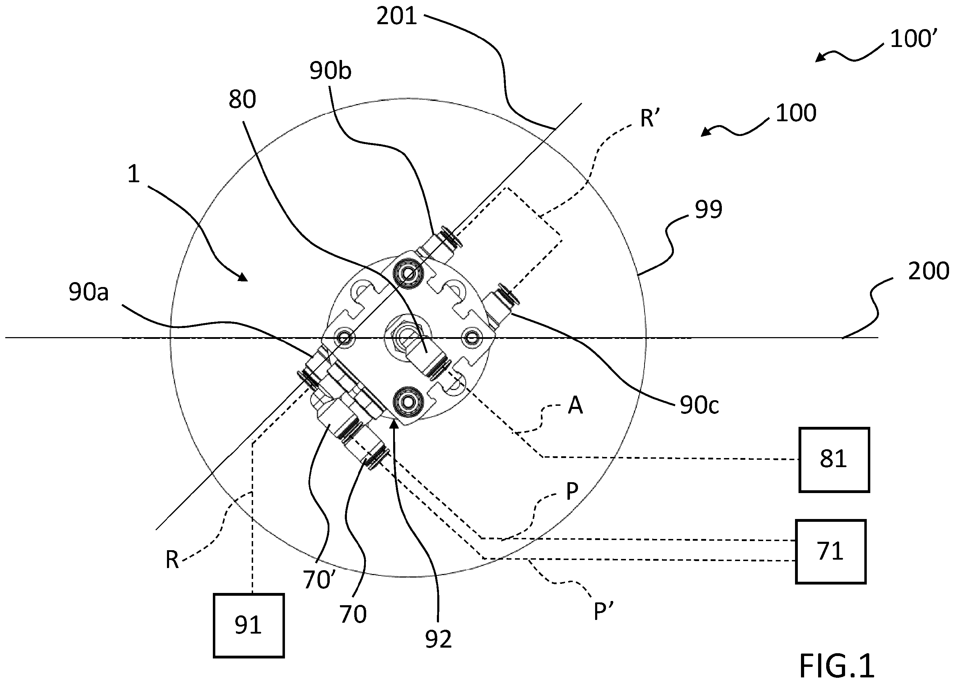

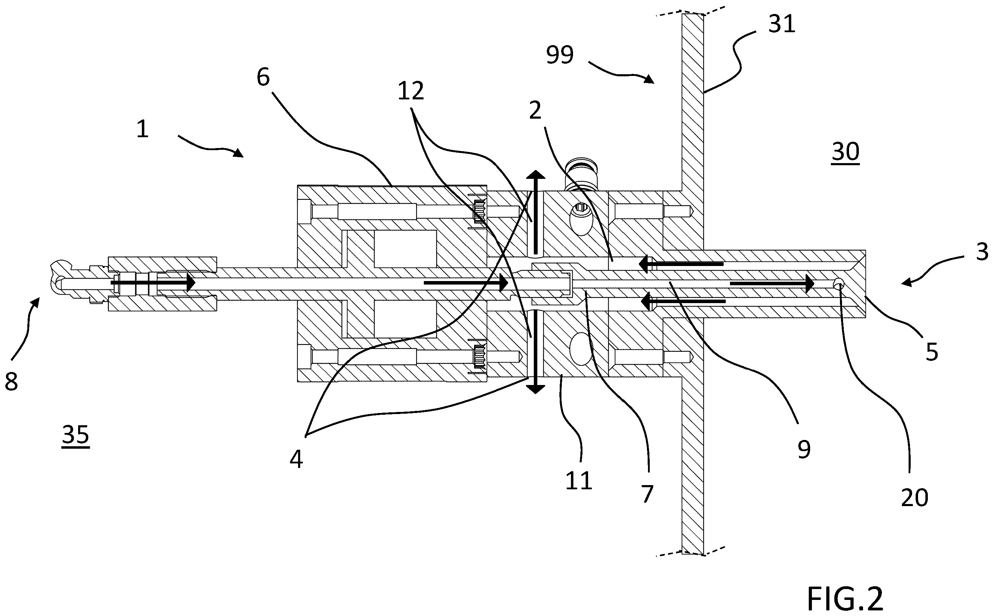

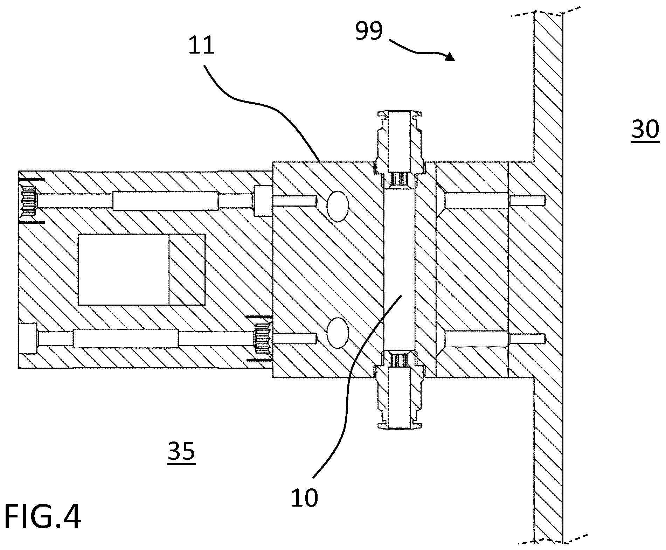

With reference to figure 1, a top view of the mould 100 is exemplarily shown in which the section line 200, along which the sections shown in figures 2-3 are obtained, and the section line 201, along which the section shown in figure 4 is obtained, are highlighted.

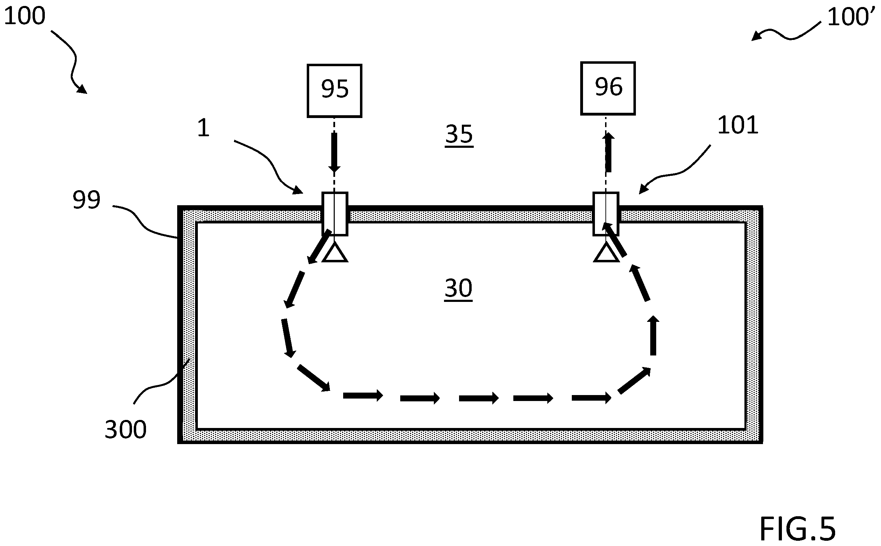

The mould 100 comprises a main body 99 (for example a metal shell, e.g., made of aluminum, formed by two half-moulds) which defines an inner cavity 30 having a conformation surface 31 counter-shaped to an article 300 to be produced (schematically shown in figure 5). The main body 99 (only partially shown) can have any shape.

The mould 100 comprises at least one venting device 1 fixed to the main body 99, for example by fastening means such as screws or bolts (as schematically shown in figures 2-4).

The venting device 1 comprises an inner chamber 2 in air communication with the inner cavity 30 through a first mouth 3 and with an outer environment 35 through at least one second mouth 4. For example, the venting device can comprise from one to eight second mouths. Exemplarily the venting device 1 shown in the attached figures comprises four second mouths (two of which are visible in figures 2-3) arranged at the end of four conduits 12 arranged in a radial pattern.

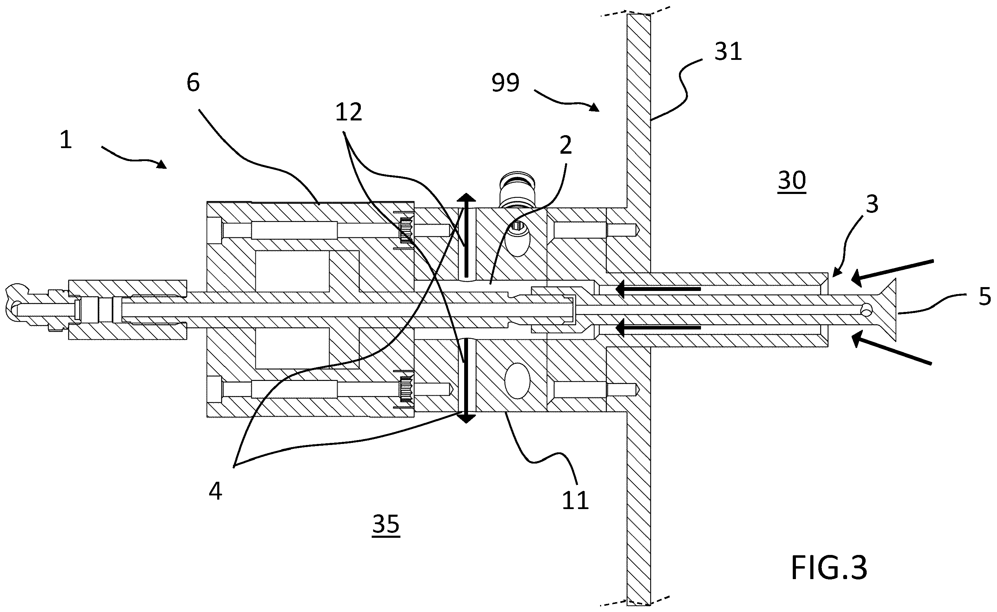

The venting device 1 comprises a shutter 5 movable between a close position (schematically shown in figure 2) in which it closes the first mouth 3 to prevent an air communication between the inner cavity 30 and the outer environment 35, and an open position (shown schematically in figure 3) in which let free the first mouth 3 to allow the aforesaid air communication (e.g., through the air path created by: cavity 30, inner chamber 2, conduits 12 and second mouths 4, as schematically represented by the arrows in figure 3).

Exemplarily the shutter 5 has a conical conformation tapered towards the outside of the mould 100. The tapered conical conformation is advantageous for a simple closure of the first mouth 3.

The venting device 1 also comprises an actuator 6 (for example of pneumatic type) for alternately moving the shutter 5 between the open position and the close position.

Exemplarily the actuator 6 is a cylinder that comprises a hollow chamber and a piston movable inside the hollow chamber due to the pressure exerted by a fluid (e.g., air, or water or oil) present inside the hollow chamber. The machine 100', as schematically shown in figure 1, comprises a control system of the actuator 6 comprising: two fittings 70 and 70' connected to a compressor 71 for example through a respective physical tube, schematically indicated by the lines P and P'. In this way, it is possible to move the piston inside the hollow chamber at both ends of the hollow chamber, so as to alternately move the shutter 5 between the open and close positions.

Alternatively, the actuator 6 can be of the electric type, for example a linear electric actuator.

Exemplarily the inner chamber 2 is in air communication with the outer environment 35 also through a third mouth 8 exemplarily arranged on the opposite side of the inner chamber 2 with respect to the shutter 5. Exemplarily the machine 100' comprises a system for introducing air which comprises (as schematically shown in figure 1) a fitting 80 at the third mouth 8 and connected to a pump 81, for example by a physical tube schematically indicated by the line A.

Exemplarily the venting device 1 also comprises a control rod 7 which mechanically connects the shutter 5 to the actuator 6 and which exemplarily comprises an inner channel 9 which puts in fluid communication the third mouth 8 with a surface of the shutter 5 facing towards the inner chamber 2, and (through at least one opening 20) with the inner chamber 2 itself.

The venting device 100 comprises a respective main body 11 which defines the inner chamber 2. The venting device 1 also comprises a cooling conduit 10 which passes through the respective main body 11. This cooling conduit 10 is not in air communication with the inner chamber 2.

The machine 100' exemplarily comprises an air-cooling system which exemplarily comprises (as schematically shown in figure 1) three fittings 90a, 90b and 90c and an outlet mouth 92. The fitting 90a is connected to a pump 91 through for example a physical tube, schematically indicated by the line R, and it is connected to the fitting 90b by the cooling conduit 10. The fitting 90b is in turn connected (for example by a U-shaped tube, schematically indicated by the line R') to the fitting 90c which is in turn connected to the outlet mouth 92, for example by a conduit (not shown) equal to the cooling conduit 10.

In the following, it is disclosed an example of a rotational moulding process implementable with the above-described mould 100.

Firstly, the process comprises the insertion of a polymeric material, for example polyethylene (alternatively or in addition, one or more of: polypropylene, polyamide and polycarbonate can be used), in fluid form (for example in powder form) in the inner cavity 30. Subsequently, the main body 99 is closed (e.g., the two half-moulds are fixed by suitable fastening means) and the mould 100 is rotated, for example about two (or three) rotation axes perpendicular to each other.

At this point, with the mould 100 in rotation, the main body 99 is heated up for example by an oven, or by electrical resistances arranged on the outer surface of the main body 99, or by a heat-transfer fluid which flows in suitable channels (not shown) made in the walls of the main body 99.

The heating of the main body 99 can be ideally divided into two subsequent phases, identifiable for the reaching of a determined condition, typically a predetermined temperature value. In these two subsequent phases, the shutter 5 of the venting device 1 is in the two positions shown with reference to figures 2-3 and as described below. In the first heating phase, the main body 99 is heated until the reaching of a first temperature, exemplarily equal to 120°C. In this first heating phase, the shutter 5 is kept in the close position (shown in figure 2) in which it obstructs the first mouth 3, and it is provided to subtract heat from the shutter 5 to keep it at a respective temperature, which can have a drift but remains lower than the first temperature. For example, the respective temperature of the shutter 5 oscillates between 40°C and 50°C during the first heating phase of the main body 99.

Exemplarily the heat subtraction from the shutter 5 comprises generating a further air flow (e.g., generated by the pump 81) which from the outer environment 35 reaches the surface of the shutter 5 facing the inner chamber 2 (i.e., the surface opposite to the inner cavity 30), and then returns to the outer environment 35. Exemplarily the further air flow (schematically represented by the arrows in figure 2) follows the air path formed by: third mouth 8, inner channel 9, opening 20, inner chamber 2, conduits 12 and second mouths 4.

At the reaching of the first temperature (for example detectable by a suitable thermal probes), the second heating phase of the main body 99 starts until the reaching of a second temperature, exemplarily equal to 190°C. During this second phase, the aforesaid air flow is interrupted and the shutter 5 is moved to the open position (shown in figure 3) in which allows the air communication between the inner cavity 30 and the inner chamber 2 (as schematically shown by the arrows in figure 3).

During the second heating phase of the main body 99, the respective main body 11 of the venting device 1 is cooled to be kept at a respective temperature lower than the first temperature (for example a temperature of about 60-70°C). The respective main body 11 is cooled by an air flow (generated by the pump 91 shown in figure 1) which from the outer environment 35 (e.g., through the fitting 90a) passes through the cooling conduit 10 to return to the outer environment (e.g., through the air line formed by the fittings 90b, 90c, outlet mouth 92 and respective connection lines).

At the reaching of the second temperature, the cooling of the main body 99 begins (e.g., by fans external to the mould, not shown) during which the shutter 5 is kept in the open position and preferably the air flow is kept active to cool the respective main body 11 of the venting device 1. After the cooling is complete, it is possible to extract the formed article 300.

In one embodiment shown with reference to figure 5, the mould 100 comprises a further venting device 101 fixed to the main body 99.

Exemplarily the further venting device 101 has all the features described above for the venting device 1, exemplarily the venting devices 1 and 101 are equal.

In this embodiment, the rotational moulding process also comprises to operate also the further venting device 101 in a completely similar way to what is described above for the venting device 1 during the two heating phases of the main body 99.

During the cooling of the main body 99, the shutter of both the venting devices 1 and 101 is kept in the open position, and a still further air flow (schematically shown by the arrows in figure 5) is generated (e.g., by a pump 95) which from the outer environment goes in the inner cavity 30 through the venting device 1, and then returns to the outer environment through the further venting device 101. In one embodiment, the pump 96 is able to generate both an overpressure for generating the air flow useful for subtracting heat from the shutter of the venting device 101 during the first heating phase of the main body 99 (see above), and a depression to favour the suction of the air from the inner cavity 30 during the cooling of the main body 99.

Exemplarily the still further air flow follows the following air path: from the pump 95, it reaches (e.g., through a tube) the third mouth of the venting device 1, then, through the inner chamber of the venting device 1, it reaches the inner cavity 30, and finally, through the inner chamber and the third mouth of the venting device 101, it reaches the pump 96 (e.g., through a suitable tube).

Alternatively, the still further air flow can flow outside through the second mouths of the venting device 101, instead of through the third mouth of the venting device 101.

Exemplarily, during the cooling of the main body 99, the air flow used to cool the respective main body of the venting device 1 is interrupted, and only the air flow used to cool the further main body of the venting device 101 is kept active.

## Claims

1. Rotational moulding process for producing an article (300), the process comprising:
- providing a mould (100) comprising:
- a main body (99) which defines an inner cavity (30) having a conformation surface (31) counter-shaped to said article (300), and
- a venting device (1) fixed to said main body (99) and comprising:
- an inner chamber (2) in air communication with said inner cavity (30) through a first mouth (3) and with an outer environment (35) through at least one second mouth (4);
- a respective main body (11) which defines said inner chamber (2);
- a shutter (5) movable between an open position, in which let free said first mouth (3) for putting said inner cavity (30) in air communication with the outer environment (35), and a close position, in which closes said first mouth (3) for preventing said air communication;
- an actuator (6) for alternately moving said shutter (5) between the open position and the close position;
- inserting a fluid form polymeric material into said inner cavity (30);
- closing said main body (99) and rotating said mould (100);
- while keeping the mould (100) in rotation and with said shutter (5) in the close position, heating said main body (99) until reaching a first temperature;
- while keeping the mould (100) in rotation, heating said main body (99) until reaching a second temperature higher than said first temperature; and
- cooling said main body (99) and extracting said article (300),
**characterized in that** said venting device (1) comprises a cooling conduit (10) which passes through said respective main body (11), said cooling conduit (10) not being in air communication with said inner chamber (2), and
**in that**, during said heating said main body (99) until reaching the second temperature and/or during said cooling said main body (99), the process comprises cooling said respective main body (11) of the venting device (1) for maintaining said respective main body (11) at a respective temperature lower than said first temperature through an air flow which from the outer environment (35) passes through said cooling conduit (10) for returning to the outer environment (35).

2. Process according to claim 1, wherein, during said heating said main body (99) until reaching the first temperature, the process comprises subtracting heat from said shutter (5) for maintaining said shutter (5) at a respective temperature lower than said first temperature, wherein said inner chamber (2) is in air communication with the outer environment (35) also through a third mouth (8) arranged at opposite side of said inner chamber (2) with respect to said shutter (5), wherein said subtracting heat from said shutter (5) comprises generating a further air flow which from the outer environment (35) reaches a surface of said shutter (5) facing away from said inner cavity (30), and then returns to the outer environment (35), and wherein said further air flow goes from said third mouth (8) to said surface of said shutter (5), then to said inner chamber (2) and finally to said outer environment (35) through said at least one second mouth (4), and wherein a difference between said first temperature and said respective temperature of the shutter (5) is greater than or equal to 10°C, preferably greater than or equal to 30°C.

3. Process according to any one of the preceding claims, wherein said first temperature is greater than or equal to 90°C, preferably greater than or equal to 110°C, and/or less than or equal to 160°C, preferably less than or equal to 140°C, wherein said second temperature is greater than or equal to 150°C, preferably greater than or equal to 170°C, and/or less than or equal to 250°C, preferably less than or equal to 230°C.

4. Process according to any one of the preceding claims, wherein a difference between said first temperature and said respective temperature of the respective main body (11) of the venting device (1) is greater than or equal to 10°C, preferably greater than or equal to 20°C, and wherein said respective temperature of the respective main body (11) of the venting device (1) is less than or equal to 100°C, preferably less than or equal to 80°C.

5. Process according to any one of the preceding claims, wherein during said heating said main body (99) until reaching said second temperature and/or during said cooling said main body (99), said shutter (5) is in the open position.

6. Process according to any one of the preceding claims, wherein said mould (100) comprises a further venting device (101) fixed to said main body (99) and comprising:
- a respective inner chamber in air communication with said inner cavity (30) through a respective first mouth and with an outer environment through at least one respective second mouth;
- a respective shutter movable between a respective open position, in which let free said respective first mouth for putting said inner cavity (30) in air communication with the outer environment, and a respective close position, in which closes said respective first mouth for preventing said air communication;
- a respective actuator for alternately moving said respective shutter between the respective open position and the respective close position;
- a further main body which defines said respective inner chamber; and
- a respective cooling conduit that passes through said further main body, said respective cooling conduit not being in air communication with said respective inner chamber,
and wherein, during said cooling the main body (99), the process comprises:
- cooling said further main body of the further venting device (101) through a respective air flow that from the outer environment (35) passes through said respective cooling conduit for returning to the outer environment (35).

7. Process according to claim 6, comprising, during said heating said main body (99) until reaching said first temperature and said second temperature, operating said further venting device (101) as said venting device (1) is operated,
and, during said cooling said main body (99):
- keeping said shutter (5) in the open position and said respective shutter in the respective open position;
- generating a still further air flow which from the outer environment (35) reaches said inner cavity through said venting device, and then returns to the outer environment through said further venting device.

8. Mould (100) for rotational moulding comprising:
- a main body (99) which defines an inner cavity (30) having a conformation surface (31) counter-shaped to said article (300), and
- a venting device (1) fixed to said main body (99) and comprising:
- an inner chamber (2) in air communication with said inner cavity (30) through a first mouth (3) and with an outer environment (35) through at least one second mouth (4);
- a shutter (5) movable between an open position, in which let free said first mouth (3) for putting said inner cavity (30) in air communication with the outer environment (35), and a close position, in which closes said first mouth (3) for preventing said air communication; and
- an actuator (6) for alternately moving said shutter (5) between the open position and the close position;
**characterized in that** said venting device (1) further comprises:
- a respective main body (11) which defines said inner chamber (2); and
- a cooling conduit (10) which passes through said respective main body (11), said cooling conduit (10) not being in air communication with said inner chamber (2).

9. Mould (100) according to claim 8, wherein said inner chamber (2) is in air communication with the outer environment (35) also through a third mouth (8) arranged at opposite side of said inner chamber (2) with respect to said shutter (5), wherein said venting device (1) comprises a control rod (7) which mechanically connects said shutter (5) to said actuator (6), said control rod (7) comprising an inner channel (9) which puts in fluid communication said third mouth (8) with a surface of the shutter (5) facing away from said inner cavity (30) and with said inner chamber (2).

10. Mould (100) according to claim 8 or 9, comprising a further venting device (101) fixed to said main body (99) and comprising:
- a respective inner chamber in air communication with said inner cavity (30) through a respective first mouth and with an outer environment through at least one respective second mouth;
- a respective shutter movable between a respective open position, in which lets free said respective first mouth for putting said inner cavity (30) in air communication with the outer environment, and a respective close position, in which closes said respective first mouth for preventing said air communication;
- a respective actuator for alternately moving said respective shutter between the respective open position and the respective close position;
- a further main body which defines said respective inner chamber; and
- a respective cooling conduit that passes through said further main body, said respective cooling conduit not being in air communication with said respective inner chamber.

11. Machine for rotational moulding comprising a mould (100) according to claim 8 or 9 or 10 and rotating means of the mould (100).

## Patentansprüche

1. Rotationsformverfahren zum Herstellen eines Artikels (300), wobei das Verfahren Folgendes umfasst:
- Bereitstellen einer Form (100), umfassend:
- einen Hauptkörper (99), der einen Innenhohlraum (30) definiert, welcher eine Formfläche (31) aufweist, die dem Artikel (300) komplementär geformt ist, und
- eine Entlüftungsvorrichtung (1), die an dem Hauptkörper (99) befestigt ist und Folgendes umfasst:
- eine Innenkammer (2), die über eine erste Öffnung (3) lufttechnisch mit dem Innenhohlraum (30) und über wenigstens eine zweite Öffnung (4) lufttechnisch mit einer äußeren Umgebung (35) verbunden ist;
- einen jeweiligen Hauptkörper (11), der die Innenkammer (2) definiert;
- ein Verschlussorgan (5), das zwischen einer Offenstellung, in der es die erste Öffnung (3) freigibt, um den Innenhohlraum (30) lufttechnisch mit der äußeren Umgebung (35) zu verbinden, und einer Schließstellung, in der es die erste Öffnung (3) verschließt, um die lufttechnische Verbindung zu verhindern, beweglich ist;
- einen Aktuator (6) zum alternierenden Bewegen des Verschlussorgans (5) zwischen der Offenstellung und der Schließstellung;
- Einführen eines polymeren Materials in flüssiger Form in den Innenhohlraum (30);
- Schließen des Hauptkörpers (99) und Rotieren der Form (100);
- während die Form (100) in Rotation gehalten wird und sich das Verschlussorgan (5) in der Schließstellung befindet, Erhitzen des Hauptkörpers (99) bis zum Erreichen einer ersten Temperatur;
- während die Form (100) in Rotation gehalten wird, Erhitzen des Hauptkörpers (99) bis zum Erreichen einer zweiten Temperatur, die höher ist als die erste Temperatur; und
- Abkühlen des Hauptkörpers (99) und Entnehmen des Artikels (300),
**dadurch gekennzeichnet, dass** die Entlüftungsvorrichtung (1) einen Kühlkanal (10) umfasst, der durch den jeweiligen Hauptkörper (11) hindurchführt, wobei der Kühlkanal (10) nicht lufttechnisch mit der Innenkammer (2) verbunden ist,
und **dadurch gekennzeichnet, dass** während des Erhitzens des Hauptkörpers (99) bis zum Erreichen der zweiten Temperatur und/oder während des Abkühlens des Hauptkörpers (99) das Verfahren das Kühlen des jeweiligen Hauptkörpers (11) der Entlüftungsvorrichtung (1) umfasst, um den jeweiligen Hauptkörper (11) auf einer jeweiligen Temperatur zu halten, die niedriger ist als die erste Temperatur, durch einen Luftstrom, der aus der äußeren Umgebung (35) durch den Kühlkanal (10) hindurchführt, um in die äußere Umgebung (35) zurückzukehren.

2. Verfahren nach Anspruch 1, wobei, während des Erhitzens des Hauptkörpers (99) bis zum Erreichen der ersten Temperatur, das Verfahren das Abführen von Wärme von dem Verschlussorgan (5) umfasst, um das Verschlussorgan (5) auf einer jeweiligen Temperatur zu halten, die niedriger ist als die erste Temperatur, wobei die Innenkammer (2) auch über eine dritte Öffnung (8), die auf der gegenüberliegenden Seite der Innenkammer (2) relativ zu dem Verschlussorgan (5) angeordnet ist, lufttechnisch mit der äußeren Umgebung (35) verbunden ist, wobei das Abführen von Wärme von dem Verschlussorgan (5) das Erzeugen eines weiteren Luftstroms umfasst, der aus der äußeren Umgebung (35) eine Oberfläche des Verschlussorgans (5), die vom Innenhohlraum (30) abgewandt ist, erreicht und dann in die äußere Umgebung (35) zurückkehrt, und wobei der weitere Luftstrom von der dritten Öffnung (8) zur Oberfläche des Verschlussorgans (5), dann in die Innenkammer (2) und schließlich über die wenigstens eine zweite Öffnung (4) in die äußere Umgebung (35) gelangt, und wobei eine Differenz zwischen der ersten Temperatur und der jeweiligen Temperatur des Verschlussorgans (5) größer oder gleich 10 °C ist, vorzugsweise größer oder gleich 30 °C ist.

3. Verfahren nach einem der vorhergehenden Ansprüche, wobei die erste Temperatur größer oder gleich 90 °C ist, vorzugsweise größer oder gleich 110 °C, und/oder kleiner oder gleich 160 °C ist, vorzugsweise kleiner oder gleich 140 °C ist, wobei die zweite Temperatur größer oder gleich 150 °C ist, vorzugsweise größer oder gleich 170 °C, und/oder kleiner oder gleich 250 °C ist, vorzugsweise kleiner oder gleich 230 °C ist.

4. Verfahren nach einem der vorhergehenden Ansprüche, wobei eine Differenz zwischen der ersten Temperatur und der jeweiligen Temperatur des jeweiligen Hauptkörpers (11) der Entlüftungsvorrichtung (1) größer oder gleich 10 °C ist, vorzugsweise größer oder gleich 20 °C ist, und wobei die jeweilige Temperatur des jeweiligen Hauptkörpers (11) der Entlüftungsvorrichtung (1) kleiner oder gleich 100 °C ist, vorzugsweise kleiner oder gleich 80 °C ist.

5. Verfahren nach einem der vorhergehenden Ansprüche, wobei, während des Erhitzens des Hauptkörpers (99) bis zum Erreichen der zweiten Temperatur und/oder während des Abkühlens des Hauptkörpers (99), sich das Verschlussorgan (5) in der Offenstellung befindet.

6. Verfahren nach einem der vorhergehenden Ansprüche, wobei die Form (100) eine weitere Entlüftungsvorrichtung (101) umfasst, die an dem Hauptkörper (99) befestigt ist und Folgendes umfasst:
- eine jeweilige Innenkammer, die über eine jeweilige erste Öffnung lufttechnisch mit dem Innenhohlraum (30) und über wenigstens eine jeweilige zweite Öffnung mit einer äußeren Umgebung lufttechnisch verbunden ist;
- ein jeweiliges Verschlussorgan, das zwischen einer jeweiligen Offenstellung, in der es die jeweilige erste Öffnung freigibt, um den Innenhohlraum (30) lufttechnisch mit der äußeren Umgebung zu verbinden, und einer jeweiligen Schließstellung, in der es die jeweilige erste Öffnung verschließt, um die lufttechnische Verbindung zu verhindern, beweglich ist;
- einen jeweiligen Aktuator zum alternierenden Bewegen des jeweiligen Verschlussorgans zwischen der jeweiligen Offenstellung und der jeweiligen Schließstellung;
- einen weiteren Hauptkörper, der die jeweilige Innenkammer definiert; und
- einen jeweiligen Kühlkanal, der durch den weiteren Hauptkörper hindurchführt, wobei der jeweilige Kühlkanal nicht lufttechnisch mit der jeweiligen Innenkammer verbunden ist, wobei, während des Abkühlens des Hauptkörpers (99), das Verfahren Folgendes umfasst:
- Kühlen des weiteren Hauptkörpers der weiteren Entlüftungsvorrichtung (101) durch einen jeweiligen Luftstrom, der aus der äußeren Umgebung (35) durch den jeweiligen Kühlkanal hindurchführt, um in die äußere Umgebung (35) zurückzukehren.

7. Verfahren nach Anspruch 6, umfassend, während des Erhitzens des Hauptkörpers (99) bis zum Erreichen der ersten Temperatur und der zweiten Temperatur, das Betreiben der weiteren Entlüftungsvorrichtung (101) in gleicher Weise, wie die Entlüftungsvorrichtung (1) betrieben wird,
und während des Abkühlens des Hauptkörpers (99):
- Halten des Verschlussorgans (5) in der Offenstellung und des jeweiligen Verschlussorgans in der jeweiligen Offenstellung;
- Erzeugen eines noch weiteren Luftstroms, der aus der äußeren Umgebung (35) durch die Entlüftungsvorrichtung in den Innenhohlraum gelangt und dann durch die weitere Entlüftungsvorrichtung in die äußere Umgebung zurückkehrt.

8. Form (100) für das Rotationsformen, umfassend:
- einen Hauptkörper (99), der einen Innenhohlraum (30) definiert, welcher eine Formfläche (31) aufweist, die dem Artikel (300) komplementär geformt ist, und
- eine Entlüftungsvorrichtung (1), die an dem Hauptkörper (99) befestigt ist und Folgendes umfasst:
- eine Innenkammer (2), die über eine erste Öffnung (3) lufttechnisch mit dem Innenhohlraum (30) und über wenigstens eine zweite Öffnung (4) lufttechnisch mit einer äußeren Umgebung (35) verbunden ist;
- ein Verschlussorgan (5), das zwischen einer Offenstellung, in der es die erste Öffnung (3) freigibt, um den Innenhohlraum (30) lufttechnisch mit der äußeren Umgebung (35) zu verbinden, und einer Schließstellung, in der es die erste Öffnung (3) verschließt, um die lufttechnische Verbindung zu verhindern, beweglich ist; und
- einen Aktuator (6) zum alternierenden Bewegen des Verschlussorgans (5) zwischen der Offenstellung und der Schließstellung;
**dadurch gekennzeichnet, dass** die Entlüftungsvorrichtung (1) ferner Folgendes umfasst:
- einen jeweiligen Hauptkörper (11), der die Innenkammer (2) definiert; und
- einen Kühlkanal (10), der durch den jeweiligen Hauptkörper (11) hindurchführt, wobei der Kühlkanal (10) nicht lufttechnisch mit der Innenkammer (2) verbunden ist.

9. Form (100) nach Anspruch 8, wobei die Innenkammer (2) auch über eine dritte Öffnung (8), die auf der gegenüberliegenden Seite der Innenkammer (2) relativ zu dem Verschlussorgan (5) angeordnet ist, lufttechnisch mit der äußeren Umgebung (35) verbunden ist, wobei die Entlüftungsvorrichtung (1) eine Steuerstange (7) umfasst, die das Verschlussorgan (5) mechanisch mit dem Aktuator (6) verbindet, wobei die Steuerstange (7) einen Innenkanal (9) umfasst, der die dritte Öffnung (8) mit einer Oberfläche des Verschlussorgans (5), die vom Innenhohlraum (30) abgewandt ist, und mit der Innenkammer (2) fluidtechnisch verbindet.

10. Form (100) nach Anspruch 8 oder 9, umfassend eine weitere Entlüftungsvorrichtung (101), die an dem Hauptkörper (99) befestigt ist und Folgendes umfasst:
- eine jeweilige Innenkammer, die über eine jeweilige erste Öffnung lufttechnisch mit dem Innenhohlraum (30) und über wenigstens eine jeweilige zweite Öffnung mit einer äußeren Umgebung lufttechnisch verbunden ist;
- ein jeweiliges Verschlussorgan, das zwischen einer jeweiligen Offenstellung, in der es die jeweilige erste Öffnung freigibt, um den Innenhohlraum (30) lufttechnisch mit der äußeren Umgebung zu verbinden, und einer jeweiligen Schließstellung, in der es die jeweilige erste Öffnung verschließt, um die lufttechnische Verbindung zu verhindern, beweglich ist;
- einen jeweiligen Aktuator zum alternierenden Bewegen des jeweiligen Verschlussorgans zwischen der jeweiligen Offenstellung und der jeweiligen Schließstellung;
- einen weiteren Hauptkörper, der die jeweilige Innenkammer definiert; und
- einen jeweiligen Kühlkanal, der durch den weiteren Hauptkörper hindurchführt, wobei der jeweilige Kühlkanal nicht lufttechnisch mit der jeweiligen Innenkammer verbunden ist.

11. Maschine zum Rotationsformen, umfassend eine Form (100) nach Anspruch 8 oder 9 oder 10 und Drehmittel zum Drehen der Form (100).

## Revendications

1. Procédé de moulage par rotation pour la production d'un article (300), le procédé comprenant :
- la fourniture d'un moule (100) comprenant :
- un corps principal (99) qui définit une cavité interne (30) présentant une surface de conformation (31) complémentaire audit article (300), et
- un dispositif de ventilation (1) fixé audit corps principal (99) et comprenant :
- une chambre interne (2) en communication d'air avec ladite cavité interne (30) par une première ouverture (3) et avec un environnement extérieur (35) par au moins une deuxième ouverture (4) ;
- un corps principal respectif (11) qui définit ladite chambre interne (2) ;
- un obturateur (5) mobile entre une position ouverte, dans laquelle il libère ladite première ouverture (3) afin de mettre ladite cavité interne (30) en communication d'air avec l'environnement extérieur (35), et une position fermée, dans laquelle il ferme ladite première ouverture (3) afin d'empêcher ladite communication d'air ;
- un actionneur (6) pour déplacer alternativement ledit obturateur (5) entre la position ouverte et la position fermée ;
- l'introduction d'un matériau polymère sous forme fluide dans ladite cavité interne (30) ;
- la fermeture dudit corps principal (99) et la rotation dudit moule (100) ;
- tout en maintenant le moule (100) en rotation et avec ledit obturateur (5) en position fermée, le chauffage dudit corps principal (99) jusqu'à atteindre une première température ;
- tout en maintenant le moule (100) en rotation, le chauffage dudit corps principal (99) jusqu'à atteindre une deuxième température supérieure à ladite première température ;
- le refroidissement dudit corps principal (99) et l'extraction dudit article (300),
**caractérisé en ce que** ledit dispositif de ventilation (1) comprend un conduit de refroidissement (10) qui traverse ledit corps principal respectif (11), ledit conduit de refroidissement (10) n'étant pas en communication d'air avec ladite chambre interne (2), et **en ce que**, pendant le chauffage dudit corps principal (99) jusqu'à atteindre la deuxième température et/ou pendant le refroidissement dudit corps principal (99), le procédé comprend le refroidissement dudit corps principal respectif (11) du dispositif de ventilation (1) afin de maintenir ledit corps principal respectif (11) à une température respective inférieure à ladite première température, au moyen d'un flux d'air qui, depuis l'environnement extérieur (35), traverse ledit conduit de refroidissement (10) pour retourner dans l'environnement extérieur (35).

2. Procédé selon la revendication 1, dans lequel, pendant le chauffage dudit corps principal (99) jusqu'à atteindre la première température, le procédé comprend la soustraction de chaleur audit obturateur (5) afin de maintenir ledit obturateur (5) à une température respective inférieure à ladite première température, ladite chambre interne (2) étant en communication d'air avec l'environnement extérieur (35) également par une troisième ouverture (8) disposée du côté opposé de ladite chambre interne (2) par rapport audit obturateur (5), ladite soustraction de chaleur audit obturateur (5) comprenant la génération d'un flux d'air supplémentaire qui, depuis l'environnement extérieur (35), atteint une surface dudit obturateur (5) faisant face à l'opposé de ladite cavité interne (30), puis retourne dans l'environnement extérieur (35), ledit flux d'air supplémentaire allant de ladite troisième ouverture (8) vers ladite surface dudit obturateur (5), puis vers ladite chambre interne (2), et enfin vers l'environnement extérieur (35) à travers ladite au moins une deuxième ouverture (4), et dans lequel une différence entre ladite première température et la température respective de l'obturateur (5) est supérieure ou égale à 10 °C, de préférence supérieure ou égale à 30 °C.

3. Procédé selon l'une quelconque des revendications précédentes, dans lequel ladite première température est supérieure ou égale à 90 °C, de préférence supérieure ou égale à 110 °C, et/ou inférieure ou égale à 160 °C, de préférence inférieure ou égale à 140 °C, et dans lequel ladite deuxième température est supérieure ou égale à 150 °C, de préférence supérieure ou égale à 170 °C, et/ou inférieure ou égale à 250 °C, de préférence inférieure ou égale à 230 °C.

4. Procédé selon l'une quelconque des revendications précédentes, dans lequel une différence entre ladite première température et la température respective du corps principal respectif (11) du dispositif de ventilation (1) est supérieure ou égale à 10 °C, de préférence supérieure ou égale à 20 °C, et dans lequel ladite température respective du corps principal respectif (11) du dispositif de ventilation (1) est inférieure ou égale à 100 °C, de préférence inférieure ou égale à 80 °C.

5. Procédé selon l'une quelconque des revendications précédentes, dans lequel, pendant le chauffage dudit corps principal (99) jusqu'à atteindre ladite deuxième température et/ou pendant le refroidissement dudit corps principal (99), ledit obturateur (5) est en position ouverte.

6. Procédé selon l'une quelconque des revendications précédentes, dans lequel ledit moule (100) comprend un dispositif de ventilation supplémentaire (101) fixé audit corps principal (99) et comprenant :
- une chambre interne respective en communication d'air avec ladite cavité interne (30) par une première ouverture respective, et avec un environnement extérieur par au moins une deuxième ouverture respective ;
- un obturateur respectif mobile entre une position ouverte respective, dans laquelle il libère ladite première ouverture respective afin de mettre ladite cavité interne (30) en communication d'air avec l'environnement extérieur, et une position fermée respective, dans laquelle il ferme ladite première ouverture respective afin d'empêcher ladite communication d'air ;
- un actionneur respectif pour déplacer alternativement ledit obturateur respectif entre la position ouverte respective et la position fermée respective ;
- un corps principal supplémentaire qui définit ladite chambre interne respective ; et
- un conduit de refroidissement respectif qui traverse ledit corps principal supplémentaire, ledit conduit de refroidissement respectif n'étant pas en communication d'air avec ladite chambre interne respective,
et dans lequel, pendant le refroidissement dudit corps principal (99), le procédé comprend:
- le refroidissement dudit corps principal supplémentaire du dispositif de ventilation supplémentaire (101) au moyen d'un flux d'air respectif qui, depuis l'environnement extérieur (35), traverse ledit conduit de refroidissement respectif pour retourner dans l'environnement extérieur (35).

7. Procédé selon la revendication 6, comprenant, pendant le chauffage dudit corps principal (99) jusqu'à atteindre ladite première température et ladite deuxième température, le fonctionnement dudit dispositif de ventilation supplémentaire (101) de la même manière que le dispositif de ventilation (1) est actionné,
et, pendant le refroidissement dudit corps principal (99) :
- le maintien dudit obturateur (5) en position ouverte et dudit obturateur respectif en position ouverte respective ;
- la génération d'un flux d'air encore supplémentaire qui, depuis l'environnement extérieur (35), atteint ladite cavité interne à travers ledit dispositif de ventilation, puis retourne dans l'environnement extérieur à travers ledit dispositif de ventilation supplémentaire.

8. Moule (100) pour le moulage par rotation, comprenant :
- un corps principal (99) qui définit une cavité interne (30) présentant une surface de conformation (31) complémentaire audit article (300), et
- un dispositif de ventilation (1) fixé audit corps principal (99) et comprenant :
- une chambre interne (2) en communication d'air avec ladite cavité interne (30) par une première ouverture (3) et avec un environnement extérieur (35) par au moins une deuxième ouverture (4) ;
- un obturateur (5) mobile entre une position ouverte, dans laquelle il libère ladite première ouverture (3) afin de mettre ladite cavité interne (30) en communication d'air avec l'environnement extérieur (35), et une position fermée, dans laquelle il ferme ladite première ouverture (3) afin d'empêcher ladite communication d'air ; et
- un actionneur (6) pour déplacer alternativement ledit obturateur (5) entre la position ouverte et la position fermée ;
**caractérisé en ce que** ledit dispositif de ventilation (1) comprend en outre :
- un corps principal respectif (11) qui définit ladite chambre interne (2) ; et
- un conduit de refroidissement (10) qui traverse ledit corps principal respectif (11), ledit conduit de refroidissement (10) n'étant pas en communication d'air avec ladite chambre interne (2).

9. Moule (100) selon la revendication 8, dans lequel ladite chambre interne (2) est en communication d'air avec l'environnement extérieur (35) également par une troisième ouverture (8) disposée du côté opposé de ladite chambre interne (2) par rapport audit obturateur (5), dans lequel ledit dispositif de ventilation (1) comprend une tige de commande (7) qui relie mécaniquement ledit obturateur (5) audit actionneur (6), ladite tige de commande (7) comprenant un canal interne (9) qui met en communication fluidique ladite troisième ouverture (8) avec une surface de l'obturateur (5) faisant face à l'opposé de ladite cavité interne (30) et avec ladite chambre interne (2).

10. Moule (100) selon la revendication 8 ou 9, comprenant un dispositif de ventilation supplémentaire (101) fixé audit corps principal (99) et comprenant :
- une chambre interne respective en communication d'air avec ladite cavité interne (30) par une première ouverture respective et avec un environnement extérieur par au moins une deuxième ouverture respective ;
- un obturateur respectif mobile entre une position ouverte respective, dans laquelle il libère ladite première ouverture respective afin de mettre ladite cavité interne (30) en communication d'air avec l'environnement extérieur, et une position fermée respective, dans laquelle il ferme ladite première ouverture respective afin d'empêcher ladite communication d'air ;
- un actionneur respectif pour déplacer alternativement ledit obturateur respectif entre la position ouverte respective et la position fermée respective ;
- un corps principal supplémentaire qui définit ladite chambre interne respective ; et
- un conduit de refroidissement respectif qui traverse ledit corps principal supplémentaire, ledit conduit de refroidissement respectif n'étant pas en communication d'air avec ladite chambre interne respective.

11. Machine pour le moulage par rotation, comprenant un moule (100) selon la revendication 8 ou 9 ou 10 et des moyens de rotation du moule (100).
